# EUROPEAN PATENT APPLICATION

(11) **EP 4 528 991 A1**
(43) Date of publication of application: **26.03.2025**
(21) Application number: 23854216.1
(22) Date of filing: 28.07.2023
(51) Int. Cl.: H02K 1/2795

(54) **AXIAL ELECTRIC MOTOR ROTOR, AXIAL ELECTRIC MOTOR, POWER ASSEMBLY AND VEHICLE**

(30) Priority: 15.08.2022 CN 202210976224
(71) Applicant: Huawei Digital Power Technologies Co., Ltd., Shenzhen, Guangdong 518043 (CN)
(72) Inventor: SHI, Chaojie, Shenzhen, Guangdong 518043 (CN); ZHOU, Zhao, Shenzhen, Guangdong 518043 (CN); XU, Shuguang, Shenzhen, Guangdong 518043 (CN)
(74) Representative: Isarpatent
(86) International application number: PCT/CN2023/109891
(87) International publication number: WO 2024/037312

(57) **Abstract**

This application provides an axial motor rotor, an axial motor, a powertrain, and a vehicle. The axial motor rotor includes a rotor support and a magnet structure. The rotor support includes a first support portion and a second support portion that are coaxially disposed, and the first support portion is sleeved on a side that is of the second support portion and that is away from an axis of the second support portion. A plurality of magnet units in the magnet structure are sequentially arranged in a circumferential direction, and each magnet unit is located between the first support portion and the second support portion. Two ends of the magnet unit in a radial direction of the second support portion are fastened to the first support portion and the second support portion respectively. At least a part of a first soft magnet and at least a part of a first permanent magnet that are in the magnet unit are stacked in an axial direction. In this application, the plurality of magnet units are arranged in an encircling manner to form the magnet structure, so that a processing process of each magnet unit is simpler. In addition, each magnet unit is fastened by using the rotor support, thereby improving reliability. The first soft magnet is configured to concentrate magnetic flux lines, increase a density of magnetic fluxes in an air gap, increase output torque, and improve performance of the axial motor.

## Description

This application claims priority to Chinese Patent Application No. 202210976224.0, filed with the China National Intellectual Property Administration on August 15, 2022 and entitled "AXIAL MOTOR ROTOR, AXIAL MOTOR, POWERTRAIN, AND VEHICLE", which is incorporated herein by reference in its entirety.

### TECHNICAL FIELD

This application relates to the field of axial motor technologies, and in particular, to an axial motor rotor, an axial motor, a powertrain, and a vehicle.

### BACKGROUND

Compared with a conventional radial flux permanent magnet motor, an axial flux permanent magnet motor has significant advantages such as a compact structure, a high torque density, and high efficiency. In the conventional technology, during actual application, the axial flux permanent magnet motor has a low rotation speed and is mostly of a surface-mounted structure. With an increase in a running frequency of a rotor, an eddy current loss of a conventional surface-mounted permanent magnet rotor structure increases significantly, resulting in degrading performance of the motor. In addition, a reluctance torque component of the rotor is small, and consequently, power decreases rapidly when a speed is high. Considering requirements for structural strength and maintaining high power when the speed is high, a preferred solution is to make a rotor core into an integral ring-shaped structure with magnetic steel embedded in the rotor core. However, the ring-shaped core structure is generally formed by coiling silicon steel sheets, and an inner ring wall of the ring-shaped core structure is an Archimedean spiral instead of a circle. As a result, inner and outer ring walls of the rotor core cannot be in interference fit with other mechanical parts of the motor rotor effectively, leading to an unreliable connection between an inner ring wall of the magnetic steel and a motor shaft and difficulty in improving the structural strength. In addition, a slot on the core formed through wounding is punched with a single punch, and a dimension of the slot is fixed. Therefore, the magnetic steel cannot be sector-shaped. This causes the magnetic steel to occupy a small area of the core at an outer diameter of the core, resulting in insufficient performance of the motor.

### SUMMARY

This application provides an axial motor rotor, an axial motor, a powertrain, and a vehicle.

According to a first aspect, this application provides an axial motor rotor, where the axial motor rotor includes a rotor support and a magnet structure. The rotor support includes a first support portion and a second support portion that are coaxially disposed, and the first support portion is sleeved on a side that is of the second support portion and that is away from an axis of the second support portion. The magnet structure includes a plurality of magnet units, where the plurality of magnet units are sequentially arranged in a circumferential direction of the second support portion, and each of the plurality of magnet units is located between the first support portion and the second support portion. Two ends of the magnet unit in a radial direction of the second support portion are fastened to the first support portion and the second support portion respectively. The magnet unit includes a first soft magnet and a first permanent magnet, and at least a part of the first soft magnet and at least a part of the first permanent magnet are stacked in an axial direction of the second support portion.

In this application, according to a first aspect, the magnet structure is fastened between the first support portion and the second support portion, and the two ends of the magnet unit in the radial direction of the second support portion are fastened to the first support portion and the second support portion respectively, thereby improving structural stability between the magnet structure and the rotor support, and improving overall reliability of the axial motor rotor. According to a second aspect, the rotor support limits and fastens the two ends of the magnet unit that are in the radial direction by using the two coaxially disposed support portions. The rotor support has a simple structure that saves space, so that the saved space can be used to fill the magnet unit. This helps increase a size of the magnet unit, increase a density of magnetic fluxes, and improve performance of the axial motor. According to a third aspect, the plurality of magnet units encircle the second support portion to form a ring-shaped magnet structure, and each magnet unit occupies only a part of the ring-shaped magnet structure. Compared with an entire ring-shaped magnet structure, the magnet structure formed by encircling and splicing the plurality of magnet units is simpler to process, and has higher processing precision, which helps improve reliability of the axial motor. According to a fourth aspect, each magnet unit includes at least a part of the first soft magnet and at least a part of the first permanent magnet that are stacked in the axial direction of the second support portion. The first soft magnet facilitates circulation of a magnetic flux line and provides a smooth circulation path for the magnetic flux line. When the first soft magnet is located on a side that is of the first permanent magnet and that is away from an air gap, a magnetic flux line of the first permanent magnet that flows outward may flow into a first permanent magnet of an adjacent magnet unit through the first soft magnet. Compared with that the magnetic flux line of the first permanent magnet flows into the first permanent magnet of the connected magnet unit through air, the first soft magnet is more conducive to the circulation of the magnetic flux line than the air, and can reduce a magnetic flux loss.

In a possible implementation, a circumferential dimension of the magnet unit gradually increases from an end close to the second support portion to an end away from the second support portion. Because the second support portion is on an inner side, the first support portion is on an outer side, and a circumferential dimension of the first support portion is greater than a circumferential dimension of the second support portion, space between the first support portion and the second support portion gradually increases from an area of a region close to the second support portion to an area of a region close to the first support portion. In this implementation, the magnet unit is disposed as above, so that the magnet unit is sector-shaped, to adapt to the space between the first support portion and the second support portion. In this way, a larger area of the magnet unit is filled between the first support portion and the second support portion, and internal space of the rotor support is fully utilized, so that an area of the magnet unit is increased, a density of magnetic fluxes is increased, and output torque is increased.

In a possible implementation, the first permanent magnet is continuous in the radial direction of the second support portion. If the first permanent magnet is discontinuous in the radial direction of the second support portion, but is arranged in the radial direction by using a plurality of magnet sub-units. A permanent magnet is generally of high structural strength and is difficult to process. For example, the permanent magnet is magnetic steel. Therefore, it is difficult to process and align surfaces on two sides of all three permanent magnets in the circumferential direction, and processing costs are high. If the surfaces on the two sides of all the three permanent magnets are not aligned in the circumferential direction, space of the rotor support is wasted, which reduces an area filled by the permanent magnet and degrades performance of the axial motor. In addition, three sets of stamping dies are needed for the three magnet sub-units, and a large quantity of dies for magnetic steel are needed. To ensure coaxiality of inner and outer arc walls of the three magnet sub-units, high processing precision is required, which causes a processing process to be complex. In this implementation, the first permanent magnet is continuous in the radial direction of the second support portion. A structure that is single-piece and continuous in the radial direction can ensure that surfaces on two sides of the first permanent magnet in the circumferential direction are aligned. This not only simplifies processing, but also helps increase a size of the magnet unit to increase a density of magnetic fluxes.

In a possible implementation, a projection of the first permanent magnet on the first soft magnet in the axial direction of the second support portion is located within the first soft magnet. Based on configuration in this implementation, a circumferential dimension of the first soft magnet is greater than a circumferential dimension of the first permanent magnet. This facilitates concentration of magnetic flux lines and magnetic conduction. In this implementation, an area of a largest surface of the first permanent magnet is smaller than an area of a largest surface of the first soft magnet, so that most or all of magnetic flux lines flowing out from the first permanent magnet can enter the first soft magnet, be concentrated through the first soft magnet, and flow into an adjacent magnet unit through the first soft magnet.

In a possible implementation, the magnet unit further includes a second soft magnet. The first permanent magnet includes a first body portion, a first portion, and a second portion. The first soft magnet, the first body portion, and the second soft magnet are stacked in the axial direction of the second support portion. The first portion and the second portion are arranged on two sides of the first body portion and the second soft magnet in the circumferential direction of the second support portion. In this implementation, the first soft magnet and the second soft magnet are disposed on two sides of the first permanent magnet in the axial direction respectively, so that magnetic flux lines on the two sides of the first permanent magnet in the axial direction are all concentrated by the soft magnets, thereby increasing a density of magnetic fluxes in the air gap. In this implementation, configuration of the first portion and the second portion facilitates concentration of the magnetic flux lines. When the first portion and the second portion protrude toward a side of the air gap, the magnetic flux lines are concentrated into a winding coil on the stator, so that a waveform of a density of magnetic fluxes in the air gap is close to a sine wave. This can increase output torque and reduce torque ripple.

In a possible implementation, the first permanent magnet is magnetic steel, and a circumferential dimension of the first body portion gradually increases from an end close to the second support portion to an end away from the second support portion. Therefore, the first body portion is sector-shaped, where the first body portion is also magnetic steel, and the magnetic steel is sector-shaped, allowing full use of space in the rotor support, so as not to cause insufficient performance of the motor due to a small size that is of the magnet unit and that is occupied by the magnetic steel at an outer diameter. The magnetic steel is sector-shaped to effectively improve performance of the axial motor. In addition, the magnetic steel is built in the magnet unit, which increases a torque component of the axial motor and causes the axial motor to maintain a large power under high speed conditions.

In a possible implementation, in the first permanent magnet, the first body portion, the first portion, and the second portion are structures independent of each other, which facilitates processing. For example, when the first permanent magnet is magnetic steel, the magnetic steel is difficult to shape due to high strength. In this implementation, the first permanent magnet is set to a U-shaped structure by using three independent structures, which facilitates processing.

In a possible implementation, the magnet unit further includes a second permanent magnet, a slot is provided on a surface that is of the second soft magnet and that is away from the first body portion, and the second permanent magnet is located in the slot. In this implementation, both the second permanent magnet and the first permanent magnet are configured to generate a magnetic flux line, increase a magnetic flux, increase output torque, and improve performance of the motor.

In a possible implementation, a projection of the second permanent magnet on the first body portion in the axial direction of the second support portion is located within the first body portion. In this implementation, the second permanent magnet and the first body portion are configured as above to cause a circumferential dimension of the second permanent magnet to be less than the circumferential dimension of the first body portion. When the second permanent magnet is closer to the air gap than the first body portion, an area of magnetic flux lines of the second permanent magnet is smaller than an area of magnetic flux lines of the first body portion, and the magnetic flux lines are gradually concentrated from the first body portion to the air gap, which helps increase a density of magnetic fluxes passing through the air gap.

In a possible implementation, a radian of the second permanent magnet in the circumferential direction of the second support portion is less than a radian of the first body portion in the circumferential direction of the second support portion. The circumferential direction of the second support portion is also a circumferential direction of the motor shaft, a circumferential direction of the first support portion, or a circumferential direction of the magnet structure. As shown in the figure, the radian of the second permanent magnet in the circumferential direction is less than the radian of the first body portion in the circumferential direction, so that the magnet unit facilitates concentration of the magnetic flux lines, and a density of magnetic fluxes entering the air gap is closer to the sine wave.

In a possible implementation, the first soft magnet and the second soft magnet are soft magnetic composite magnets. The soft magnetic composite magnet is a magnet into which a soft magnetic composite is processed, which can reduce a high-frequency eddy current loss and increase an application frequency. In addition, the soft magnetic composite is easy to shape, and can be processed into a soft magnet structure in a required shape. For example, a slot may be processed in the second soft magnet, where the slot matches a shape of the second permanent magnet, so that the second permanent magnet may be accommodated in the slot, and two sides of the second permanent magnet in the circumferential direction are abutted against two side walls of the slot, thereby improving stability of the two sides of the second permanent magnet in the circumferential direction.

In a possible implementation, the magnet unit further includes a third soft magnet, the second permanent magnet includes a second body portion, a third portion, and a fourth portion, the third soft magnet is located on a side that is of the second body portion and that is away from the second soft magnet, and the third portion and the fourth portion are arranged on two sides of the second body portion and the third soft magnet in a first direction. In this implementation, the third portion and the fourth portion that are of the second permanent magnet protrude toward an air gap side relative to the second body portion. This improves effect of concentrating magnetic flux lines, so that a waveform of a density of magnetic fluxes in an air gap is closer to a sine wave, and the density of magnetic fluxes in the air gap is increased.

In a possible implementation, at least one of the first soft magnet, the second soft magnet, and the third soft magnet is a soft magnetic composite magnet. The soft magnetic composite magnet is a magnet into which a soft magnetic composite is processed, which can reduce a high-frequency eddy current loss and increase an application frequency. In addition, the soft magnetic composite is easy to shape, and can be processed into a soft magnet structure in a required shape.

In a possible implementation, the magnet unit further includes a second soft magnet and a second permanent magnet, the first soft magnet, the first permanent magnet, and the second soft magnet are stacked in the axial direction of the second support portion, a slot is provided on a surface that is of the second soft magnet and that is away from the first permanent magnet, the second permanent magnet is located in the slot, and a projection of the second permanent magnet on the first permanent magnet in the axial direction of the second support portion is located within the first permanent magnet. In this implementation, a section of each of the first permanent magnet and the second permanent magnet is of a bar-shaped structure. The second permanent magnet is located in the slot of the second soft magnet, and the two sides of the second permanent magnet in the circumferential direction are covered by the second soft magnet, so that magnetic flux lines flowing out from the two sides of the second permanent magnet in the circumferential direction can be concentrated by the second soft magnet, thereby increasing a density of magnetic fluxes in the air gap.

In a possible implementation, the rotor support further includes a plurality of positioning posts. Two ends of each of the plurality of positioning posts are fastened to the first support portion and the second support portion respectively. The positioning post spaces apart two adjacent magnet units. Two adjacent positioning posts and a part of the first support portion and a part of the second support portion that are between the two connected positioning posts enclose to form accommodating space. The magnet unit is located in the accommodating space. In this implementation, the positioning post is configured to fasten the first support portion and the second support portion, to improve stability between the first support portion and the second support portion. In addition, the rotor support formed by the first support portion, the second support portion, and the positioning post is a support structure, and has large space, which facilitates heat dissipation of the magnet structure.

In a possible implementation, the magnet unit may be bonded to the first support portion, the second support portion, and the positioning post by using a bonding adhesive.

In a possible implementation, after the magnet unit is mounted on the rotor support, the bonding adhesive may be filled in a gap between the magnet unit and the rotor support, to enhance bonding strength and improve structural reliability.

In a possible implementation, the rotor support further includes a limiting rib, and the limiting rib is located on each of two sides of the positioning post in the circumferential direction. The limiting rib is disposed on each of opposite surfaces of two adjacent positioning posts. The limiting rib is configured to be clamped into a limiting slot of the magnet unit. In this way, the structural reliability of the magnet unit and the rotor support is improved.

In a possible implementation, a through-flow hole extending in the radial direction of the second support portion is disposed in the positioning post. The through-flow hole facilitates heat dissipation.

In a possible implementation, the rotor support is a non-magnetic conductive support. The non-magnetic conductive support can reduce magnetic leakage and a magnetic flux loss, so that most of magnetic fluxes of two adjacent magnet units flow into the winding coil of the stator, thereby increasing output torque. If a magnetic conductive support is used, the magnetic conductive support causes a part of magnetic fluxes to be scattered from the rotor support in the radial direction, thereby consuming the part of magnetic fluxes, and affecting performance of the axial motor.

In a possible implementation, a size of the section of the second permanent magnet gradually decreases from an end close to the first body portion to an end away from the first body portion. The section of the second permanent magnet is a section obtained by sectioning the second permanent magnet in the axial direction of the second support portion by using an arc with a same radian as that of the second permanent magnet. In this implementation, the size of the section of the second permanent magnet gradually decreases from the end close to the first body portion to the end away from the first body portion, so that a size of an end close to an air gap side is less than a size of an end away from the air gap side, and magnetic flux lines are more concentrated toward the air gap side. This causes a waveform of a density of magnetic fluxes in an air gap to be closer to a sine wave, thereby improving the density of magnetic fluxes in the air gap.

In a possible implementation, the magnet unit further includes a third soft magnet, the second permanent magnet includes a second body portion, a third portion, and a fourth portion, the third soft magnet is located on a side that is of the second body portion and that is away from the second soft magnet, and the third portion and the fourth portion are arranged on two sides of the second body portion and the third soft magnet in the circumferential direction of the second support portion. In this implementation, a section of the first permanent magnet is of a bar-shaped structure, and a section of the second permanent magnet is of a U-shaped structure. The third portion and the fourth portion that are of the second permanent magnet protrude toward an air gap side relative to the second body portion. This improves effect of concentrating magnetic flux lines, so that a waveform of a density of magnetic fluxes in an air gap is closer to a sine wave, and the density of magnetic fluxes in the air gap is increased.

In a possible implementation, in the second permanent magnet, an included angle between each of the third portion and the fourth portion and the second body portion is greater than 90°. In the first permanent magnet, an included angle between each of the first portion and the second portion and the first body portion is greater than 90°.

According to a second aspect, this application provides an axial motor, where the axial motor includes a motor shaft, a stator, and the axial motor rotor according to any one of the foregoing implementations, the stator is mounted on the motor shaft and is rotatably connected to the motor shaft, the axial motor rotor is mounted on the motor shaft and is fastened to the motor shaft, and the first soft magnet is located on a side that is of the first permanent magnet and that is away from the stator.

In a possible implementation, the axial motor includes two axial motor rotors, both the two axial motor rotors are mounted on the motor shaft and are fastened to the motor shaft, and the two axial motor rotors are located on two sides of the stator in an axial direction of the motor shaft.

According to a third aspect, this application provides a powertrain, including a gearbox and the axial motor described above, where the axial motor is connected to a power input shaft of the gearbox in a transmission manner and is configured to output power to the power input shaft.

According to a fourth aspect, this application provides a vehicle, where the vehicle includes a vehicle body and the axial motor described above, and the axial motor is mounted on the vehicle body.

In a possible implementation, the vehicle further includes wheels, the wheels are mounted on the vehicle body, and the axial motor is connected to the wheels in a transmission manner and is configured to drive the wheels to run.

### BRIEF DESCRIPTION OF DRAWINGS

To describe technical solutions in embodiments of this application more clearly, the following describes the accompanying drawings used in embodiments of this application.
FIG. 1 is an overall diagram of an axial motor according to an embodiment of this application;
FIG. 2 is an exploded view of the axial motor according to FIG. 1 of this application;
FIG. 3a is a diagram of a structure of an axial motor rotor and a stator that are of an axial motor according to an embodiment of this application;
FIG. 3b is a side view of an axial motor rotor and a stator that are of an axial motor according to an embodiment of this application;
FIG. 4 is a diagram of a structure of a powertrain according to an embodiment of this application;
FIG. 5 is a diagram of a structure of a vehicle according to an embodiment of this application;
FIG. 6 is a diagram of a structure of an axial motor rotor according to an embodiment of this application;
FIG. 7 is a diagram of a structure of an axial motor rotor according to an embodiment of this application;
FIG. 8a is a diagram of a structure of a rotor support of an axial motor rotor according to an embodiment of this application;
FIG. 8b is a partially enlarged diagram of a part M in FIG. 8a of this application;
FIG. 9 is a partial diagram of a magnet structure of an axial motor rotor according to an embodiment of this application;
FIG. 10 is a diagram of a structure of a magnet unit according to an embodiment of this application;
FIG. 11 is a diagram of a structure of two magnet units according to an embodiment of this application;
FIG. 12 is a diagram of a structure of discontinuous magnet units;
FIG. 13 is a diagram of a structure of a magnet unit according to an embodiment of this application;
FIG. 14 is a diagram of a structure of a first body portion in a first permanent magnet and a second permanent magnet that are in a magnet unit according to an embodiment of this application;
FIG. 15 is a magnetic circuit of an axial motor according to an embodiment of this application;
FIG. 16 is a diagram of a waveform of a density of magnetic fluxes in an air gap of an axial motor according to an embodiment of this application;
FIG. 17 is a diagram of a waveform of a density of magnetic fluxes in an air gap of an axial motor using magnetic steel only;
FIG. 18 is a diagram of a magnet unit according to an embodiment of this application;
FIG. 19 is a diagram of a structure of a magnet unit of an axial motor rotor according to an embodiment of this application;
FIG. 20 is a magnetic circuit of an axial motor rotor according to an embodiment of this application;
FIG. 21 is a diagram of a structure of a magnet unit of an axial motor rotor according to an embodiment of this application;
FIG. 22 is a magnetic circuit of an axial motor rotor according to an embodiment of this application;
FIG. 23 is a diagram of a structure of a magnet unit of an axial motor rotor according to an embodiment of this application;
FIG. 24 is a magnetic circuit of two-pole-pair magnet units of an axial motor rotor according to an embodiment of this application;
FIG. 25 is a diagram of a structure of a magnet unit of an axial motor rotor according to an embodiment of this application;
FIG. 26 is a magnetic circuit of two-pole-pair magnet units of an axial motor rotor according to an embodiment of this application;
FIG. 27 is a diagram of a structure of a magnet unit of an axial motor rotor according to an embodiment of this application; and
FIG. 28 is a magnetic circuit of two-pole-pair magnet units of an axial motor rotor according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, English abbreviations and related technical terms used in embodiments of this application are first explained and described below.

Soft magnetic composite: SMC, short for soft magnetic composite. The soft magnetic composite is a soft magnetic material formed by evenly dispersing magnetic particles in a non-magnetic object.

This application provides an axial motor rotor, including a rotor support and a magnet structure. The rotor support includes a first support portion and a second support portion that are coaxially disposed, and the first support portion is sleeved on a side that is of the second support portion and that is away from an axis of the second support portion. The magnet structure includes a plurality of magnet units, where the plurality of magnet units are sequentially arranged in a circumferential direction of the second support portion, and each of the plurality of magnet units is located between the first support portion and the second support portion. Two ends of the magnet unit in a radial direction of the second support portion are fastened to the first support portion and the second support portion respectively. The magnet unit includes a first soft magnet and a first permanent magnet, and at least a part of the first soft magnet and at least a part of the first permanent magnet are stacked in an axial direction of the second support portion. In this application, the plurality of magnet units are arranged in an encircling manner to form the magnet structure, and each magnet unit is a part of the ring-shaped magnet structure. A processing process of each magnet unit is simpler than a processing process of the magnet structure that is ring-shaped as a whole. In this application, each magnet unit includes the first soft magnet and the first permanent magnet that are stacked. The first soft magnet is configured to concentrate magnetic flux lines and provide a path for the magnetic flux lines, to increase a density of magnetic fluxes in an air gap, increase output torque, and reduce torque ripple. When the axial motor rotor in this application is applied to an axial motor, performance of the axial motor can be improved.

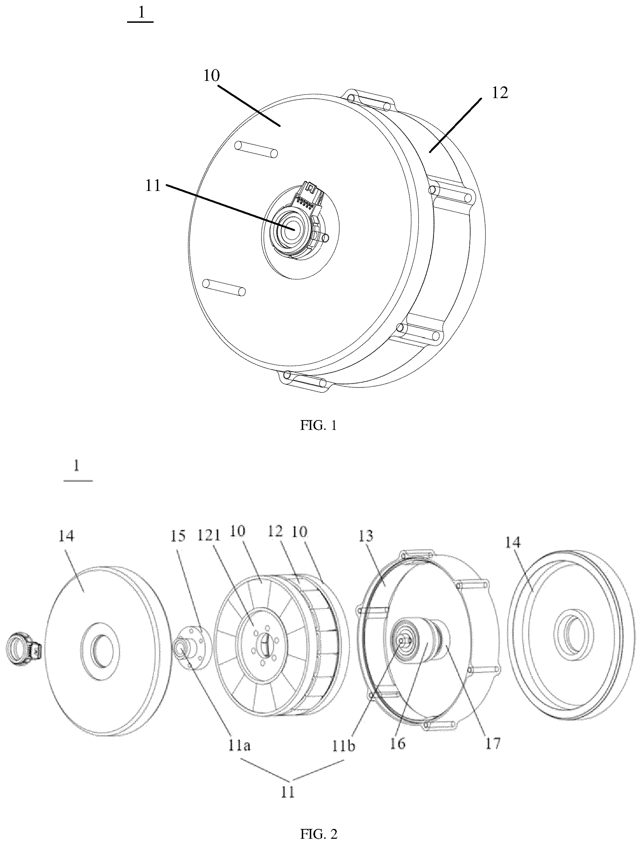

Refer to FIG. 1 and FIG. 2. FIG. 1 is an overall diagram of an axial motor 1 according to an embodiment of this application. FIG. 2 is an exploded view of the axial motor 1 according to FIG. 1 of this application. The axial motor 1 includes an axial motor rotor 10, a motor shaft 11, and a stator 12. The stator 12 is mounted on the motor shaft 11 and is rotatably connected to the motor shaft 11. The axial motor rotor 10 is mounted on the motor shaft 11 and is fastened to the motor shaft 11. When an armature winding of the stator 12 is supplied with an alternating current, a generated alternating magnetic flux interacts with a permanent magnetic flux generated by the axial motor rotor 10, so that the axial motor rotor 10 rotates relative to the stator 12. The axial motor rotor 10 is fastened to the motor shaft 11, so that the motor shaft 11 rotates with the axial motor rotor 10. The stator 12 is rotatably connected to the motor shaft 11, so that the motor shaft 11 can rotate relative to the stator 12. When the axial motor 1 operates, the stator 12 is stationary, and the axial motor rotor 10 and the motor shaft 11 rotate synchronously. An output end of the motor shaft 11 is configured to drive an external component to rotate.

In a possible implementation, the axial motor 1 further includes a housing 13 and an end cover 14 (as shown in FIG. 2). The housing 13 is located on an outer side of the stator 12, and the end cover 14 is located on a side that is of the axial motor rotor 10 and that is away from the stator 12. The end cover 14 is fastened to the housing 13, and the axial motor rotor 10 is located between the end cover 14 and the stator 12.

In a possible implementation, the axial motor 1 includes two axial motor rotors 10, both the two axial motor rotors 10 are mounted on the motor shaft 11 and are fastened to the motor shaft 11, and the two axial motor rotors 10 are located on two sides of the stator 12 in an axial direction of the motor shaft 11. The two axial motor rotors 10 improve operating efficiency of the axial motor 1. In this implementation, the axial motor 1 includes two end covers 14. As shown in FIG. 2, the two end covers 14 and the housing 13 enclose to form accommodating space, and the two axial motor rotors 10 and the stator 12 are located in the accommodating space.

In a possible implementation, the motor shaft 11 includes a first motor half-shaft 11a and a second motor half-shaft 11b. The first motor half-shaft 11a is fastened to the second motor half-shaft 11b. A first fastened plate 15 is disposed on the first motor half-shaft 11a, and the first fastened plate 15 is configured to be fastened to one of the axial motor rotors 10. For example, the first fastened plate 15 may be connected to the axial motor rotor 10 with a screw. A bearing 16 is disposed on the second motor half-shaft 11b, and the stator 12 is sleeved on the motor shaft 11 by using the bearing 16. The stator 12 is rotatably connected to the motor shaft 11 via the bearing 16. A second fastened plate 17 is further disposed on the second motor half-shaft 11b, and the second fastened plate 17 is configured to be fastened to the other axial motor rotor 10. For example, the second fastened plate 17 may be connected to the axial motor rotor 10 with a screw.

In some embodiments, the motor shaft 11 may alternatively be a single piece, and a first fastened plate 15, a bearing 16, and a second fastened plate 17 are disposed on the motor shaft 11.

In a possible implementation, the axial motor 1 includes one axial motor rotor 10 and one stator 12.

In a possible implementation, the axial motor 1 includes one axial motor rotor 10 and two stators 12, and the two stators 12 are arranged on two sides of the axial motor rotor 10 in an axial direction of the motor shaft 11.

In a possible implementation, the axial motor 1 includes a plurality of axial motor rotors 10 and a plurality of stators 12, and the axial motor rotors 10 and the stators 12 are alternately arranged in an axial direction of the motor shaft 11. For example, the axial motor 1 includes three axial motor rotors 10 and two stators 12.

In a possible implementation, the stator 12 may be a concentrated winding stator or a distributed winding stator. The concentrated winding stator includes a plurality of stator cores distributed around the motor shaft 11, where a winding is wound on each stator core to form a concentrated winding. The stator 12 shown in FIG. 2 is a concentrated winding stator. The distributed winding stator includes a stator core disposed around the motor shaft 11 as a whole, where the stator core is a single-piece structure, and a winding slot is stamped on the stator core and a winding is wound in a winding slot to form a distributed winding.

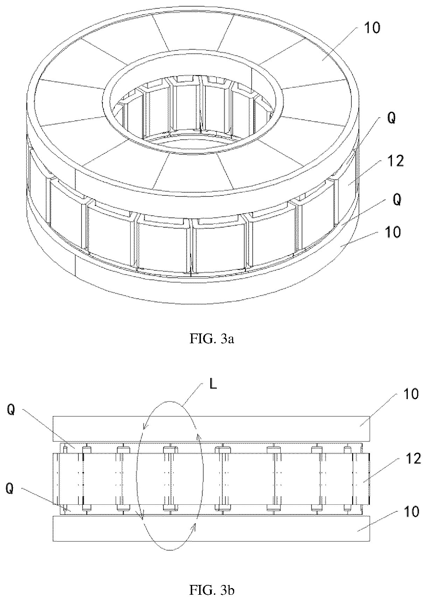

Refer to FIG. 3a and FIG. 3b. FIG. 3a is a diagram of a structure of the axial motor rotors 10 and the stator 12 according to an embodiment of this application. FIG. 3b is a side view of FIG. 3a. In this embodiment, there is an air gap Q between the stator 12 and the axial motor rotor 10, and a magnetic flux line L generated in the axial motor rotor 10 enters the stator 12 through the air gap Q. In this embodiment, gaps between the stator 12 and the two axial motor rotors 10 form two air gaps Q.

The axial motor 1 uses the axial motor rotor 10 in this application. A plurality of magnet units are arranged in an encircling manner to form a magnet structure, and each magnet unit is a part of the ring-shaped magnet structure. A processing process of each magnet unit is simpler than a processing process of the magnet structure that is ring-shaped as a whole. In addition, each magnet unit includes a first soft magnet and a first permanent magnet that are stacked. The first soft magnet is configured to: concentrate magnetic flux lines and provide a path for the magnetic flux lines, to increase a density of magnetic fluxes in an air gap, increase output torque, reduce torque ripple, and therefore improve performance of the axial motor 1.

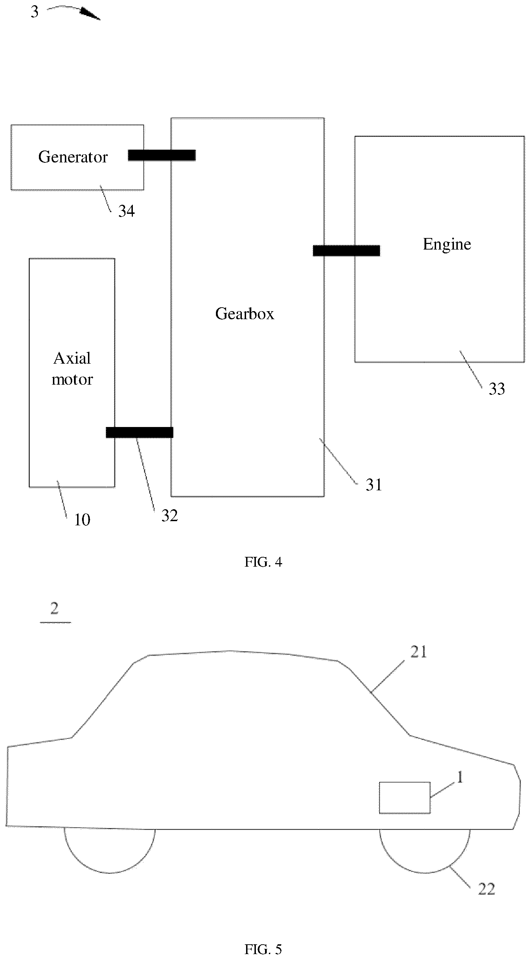

Refer to FIG. 4. FIG. 4 is a diagram of a structure of a powertrain 3 according to an embodiment of this application. The powertrain 3 includes a gearbox 31 and the axial motor 1 described above. The axial motor 1 is connected to a power input shaft 32 of the gearbox 31 in a transmission manner, and is configured to output power to the power input shaft 32. In this embodiment, the gearbox 31 and the axial motor 1 of the powertrain 3 may be separated or integrated.

In a possible implementation, a wheel drive shaft (not shown in the figure) is disposed in the gearbox 31, and the wheel drive shaft provides power for a wheel after receiving power output by the axial motor 1. In this implementation, a gear component is disposed in the gearbox 31 to implement power transfer between the axial motor 1 and the wheel drive shaft.

In a possible implementation, the powertrain 3 further includes an engine 33 and a generator 34. The engine 33 is connected to another power input shaft of the gearbox 31 in a transmission manner, and is configured to output power to the another power input shaft. The generator 34 is connected to the engine 33 in a transmission manner by using the gear component of the gearbox 31. The power output by the engine 33 is transmitted to the generator 34 by using the gearbox 31. The generator 34 generates power and is configured to store electric energy in a power battery to charge the power battery. It should be noted that the powertrain 3 provided in FIG. 4 includes the engine 33 and the generator 34, and the powertrain 3 is a hybrid power system. In some implementations, the engine 33 and the generator 34 may not be disposed, and only the axial motor 1 and the gearbox 31 are included. In this case, the powertrain 3 is a pure electric power system.

In a possible implementation, the powertrain 3 further includes at least one of an MCU, an OBC, a DC-DC, a PDU, and a BCU. The MCU means a motor control unit (full name in English: Motor Control Unit), the OBC means an on-board charger (full name in English: On-Board Charger), the DC-DC means a DC converter, the PDU means a power distribution unit (full name in English: Power Distribution Unit), and the BCU means a battery control unit (full name in English: Battery Control Unit). The powertrain 3 may integrate at least one of the foregoing components according to a requirement.

Refer to FIG. 5. An embodiment of this application provides a vehicle 2. The vehicle 2 includes a vehicle body 21 and the foregoing axial motor 1. The axial motor 1 is mounted on the vehicle body 21.

The vehicle 2 includes a car, a robot, or other forms of devices that drive. The vehicle includes an electric vehicle (Electric Vehicle, EV for short), a pure electric vehicle (Pure Electric Vehicle/Battery Electric Vehicle, PEV/BEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), a new energy vehicle (New Energy Vehicle), and the like. In some implementations, the vehicle includes a passenger car and various special-purpose vehicles with particular functions, such as an engineering rescue truck, a water sprinkler truck, a sewage suction truck, a concrete mixer truck, a crane, a medical vehicle, and the like.

For example, as shown in FIG. 5, the vehicle 2 is a car, and the vehicle 2 further includes a wheel 22. The wheel 22 is mounted on the vehicle body 21. The axial motor 1 is connected to the wheel 22 in a transmission manner, and is configured to drive the wheel 22 to run, to drive the vehicle to travel. In some implementations, the powertrain 3 described above is disposed in the vehicle 2. The powertrain 3 is mounted on the vehicle body 21, and the powertrain 3 is configured to drive the vehicle 2 to travel.

The following describes in detail an axial motor rotor in this application.

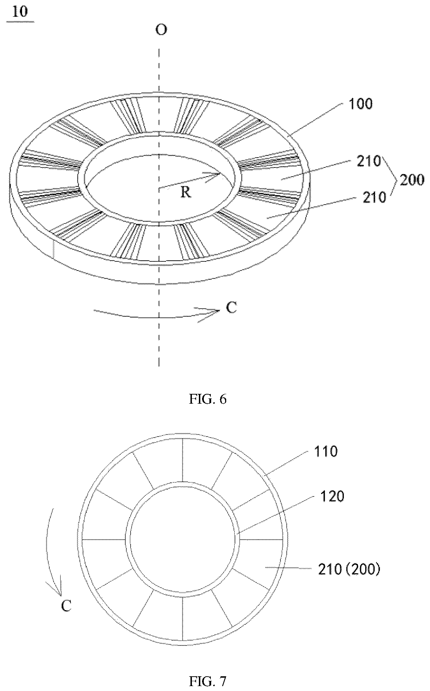

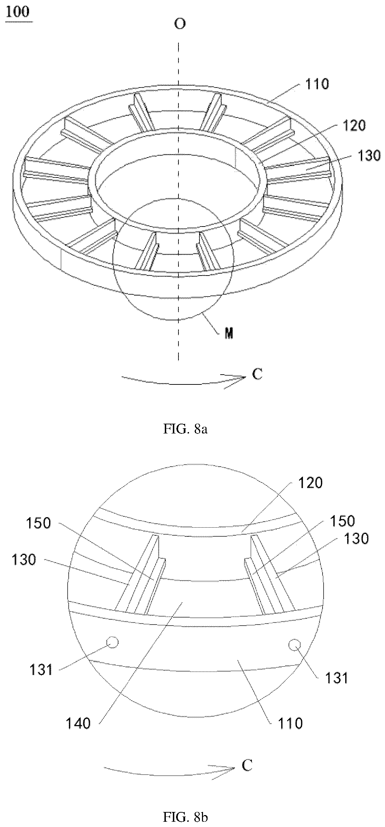

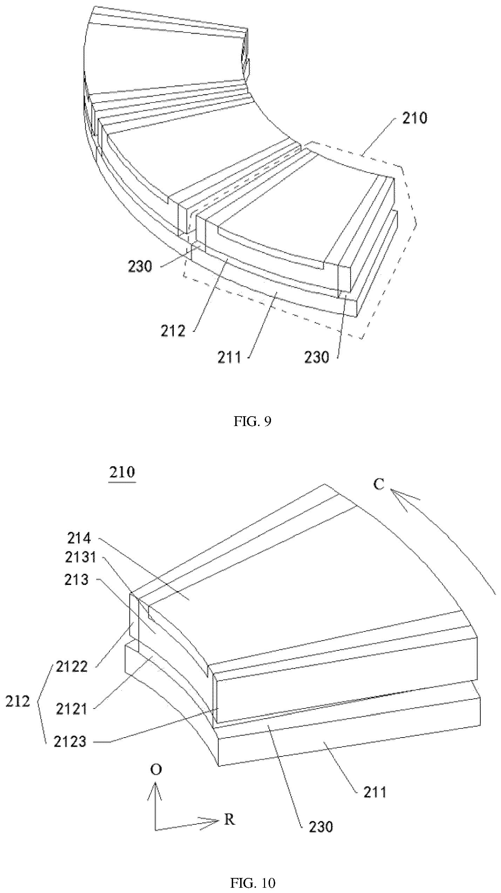

Refer to FIG. 6, FIG. 7, and FIG. 8a. FIG. 6 is a diagram of a structure of an axial motor rotor 10 according to a first embodiment of this application. FIG. 7 is a view of the axial motor rotor 10 shown in FIG. 6 as seen from a side away from a stator 12. FIG. 8a is a diagram of a structure of a rotor support 100 in FIG. 6. In this embodiment, the axial motor rotor 10 includes the rotor support 100 and a magnet structure 200. The rotor support 100 includes a first support portion 110 and a second support portion 120 that are coaxially disposed, and the first support portion 110 is sleeved on a side that is of the second support portion 120 and that is away from an axis of the second support portion 120 (as shown in FIG. 8a). The magnet structure 200 includes a plurality of magnet units 210 (as shown in FIG. 6). The plurality of magnet units 210 are sequentially arranged in a circumferential direction C of the second support portion 120, and each of the plurality of magnet units 210 is located between the first support portion 110 and the second support portion 120 (as shown in FIG. 7). Two ends that are of the magnet unit 210 and that are in a radial direction R of the second support portion 120 are fastened to the first support portion 110 and the second support portion 120 respectively. The magnet unit 210 includes a first soft magnet 211 and a first permanent magnet 212 (as shown in FIG. 9, FIG. 10, and FIG. 11), and at least a part of the first soft magnet 211 and at least a part of the first permanent magnet 212 are stacked in an axial direction of the second support portion 120.

The first support portion 110 and the second support portion 120 are ring-shaped, and are configured to be sleeved on a motor shaft 11 and fastened to the motor shaft 11. For example, a support fastened plate 121 is disposed on an inner side of the second support portion 120, and the support fastened plate 121 is fastened to a first fastened plate 15 on the motor shaft 11 through a screw (as shown in FIG. 2).

In this embodiment, the axis of the second support portion 120 coincides with an axis of the motor shaft 11, an axial direction O of the second support portion 120 coincides with an axial direction of the motor shaft 11, an extension direction of the axis of the second support portion 120 is the axial direction O of the second support portion 120, and the radial direction R of the second support portion 120 is the same as a radial direction of the motor shaft 11.

In this embodiment, the plurality of magnet units 210 are sequentially arranged in the circumferential direction C of the second support portion 120, where the circumferential direction C of the second support portion 120 is a direction surrounding the second support portion 120. The plurality of magnet units 210 are disposed around the second support portion 120, and the two ends that are of each magnet unit 210 and that are in the radial direction R of the second support portion 120 are fastened to the first support portion 110 and the second support portion 120 respectively, so that each magnet unit 210 is stably fastened between the first support portion 110 and the second support portion 120. The first support portion 110 and the second support portion 120 are spaced apart, and space between the first support portion 110 and the second support portion 120 is used to accommodate the magnet unit 210. In this application, the rotor support 100 limits and fastens the two ends that are of the magnet unit 210 and that are in the radial direction R by using the two ring-shaped support portions 110 and 120. The rotor support 100 has a simple structure that saves space, so that the saved space can be used to fill the magnet unit 210. This helps increase a size of the magnet unit 210, increase a density of magnetic fluxes, and improve performance of the axial motor 1. A performance index of the axial motor includes performance index parameters such as a torque constant, a back electromotive force coefficient, permanent magnet usage, a torque output, and a quadrature-direct axis inductance.

In this embodiment, the plurality of magnet units 210 encircle the second support portion 120 to form a ring-shaped magnet structure 200, and each magnet unit 210 occupies only a part of the ring-shaped magnet structure 200. Compared with an overall ring-shaped magnet structure, the magnet structure 200 formed by encircling and splicing the plurality of magnet units 210 is simpler to process. The overall ring-shaped magnet structure 200 needs to be sleeved on the motor shaft 11. An inner wall of the overall ring-shaped magnet structure 200 needs to be processed into a circle to be better mounted with the motor shaft 11. However, it is generally difficult to process the inner wall into the circle, and process precision is difficult to achieve. If the precision is insufficient, then the inner wall of the magnet structure 200 does not match the motor shaft 11. Consequently, connection reliability between the axial motor rotor 10 and the motor shaft 11 deteriorates, leading to poorer overall reliability of the axial motor 1. As a result, the axial motor 1 is prone to damage. However, in this application, a processing process of each magnet unit 210 is simpler. The two ends that are of each magnet unit 210 and that are in the radial direction R are arc-shaped. An arc is easier to process than a circle, with higher processing precision. A size of each magnet unit 210 may be the same. After a magnet unit 210 is processed, a plurality of magnet units 210 are spliced between the first support portion 110 and the second support portion 120 in an encircling manner, a size of each of the first support portion 110 and the second support portion 120 may be set based on a size of the magnet structure 200. It can be learned from this that, in this application, the ring-shaped magnet structure 200 formed by the plurality of magnet units 210 encircling the second support portion 120 is easier to process, and processing precision is higher. This helps improve reliability of the axial motor 1.

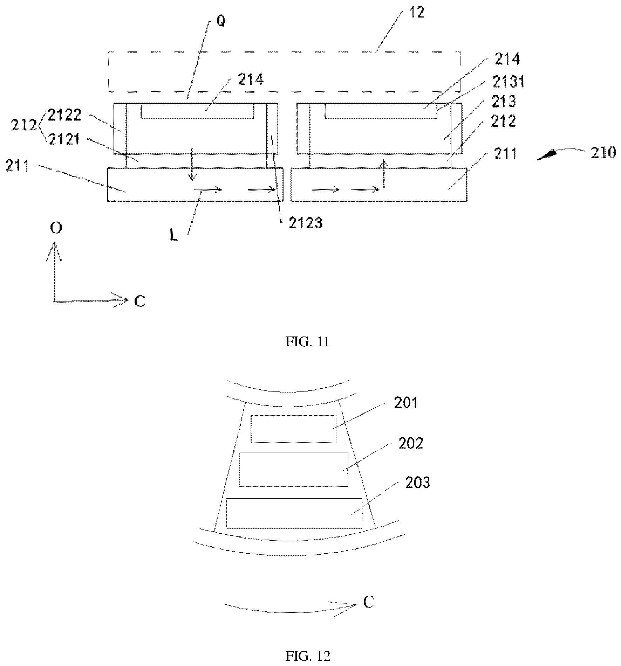

Refer to FIG. 9, FIG. 10, and FIG. 11. FIG. 9 is a partial view of the magnet structure 200. FIG. 10 is a diagram of a structure of the magnet unit 210. FIG. 11 is a view of the magnet unit 210 as seen from a side away from an axis. In this embodiment, each magnet unit 210 includes at least a part of the first soft magnet 211 and at least a part of the first permanent magnet 212 that are stacked in the axial direction O of the second support portion 120. The first soft magnet 211 facilitates flow of a magnetic flux line L, and provides a smooth circulation path for the magnetic flux line L. When the first soft magnet 211 is located on a side that is of the first permanent magnet 212 and that is away from an air gap Q (as shown in FIG. 11), the magnetic flux line L of the first permanent magnet 212 that flows outward may flow into a first permanent magnet 212 of an adjacent magnet unit 210 through the first soft magnet 211. Compared with air through which the magnetic flux line L of the first permanent magnet 212 flows into the first permanent magnet 212 of the connected magnet unit 210, the first soft magnet 211 better facilitates flow of the magnetic flux line L, and can reduce a magnetic flux loss.

In a possible implementation, two adjacent magnet units 210 are one-pole-pair magnet units. First permanent magnets 212 of the two adjacent magnet units 210 have opposite magnetization directions, so that magnetic fluxes of the two adjacent magnet units 210 form a loop.

In an implementation, the first permanent magnet 212 is also referred to as magnetic steel. Common permanent magnet materials are an aluminum-nickel-cobalt permanent magnet alloy, an iron-chromium-cobalt permanent magnet alloy, a permanent magnet ferrite, a rare earth permanent magnet material (neodymium iron boron, Nd2Fe14B), a composite permanent magnet material, and the like.

Refer to FIG. 6 and FIG. 7 again. In a possible implementation, a circumferential dimension of the magnet unit 210 gradually increases from an end close to the second support portion 120 to an end away from the second support portion 120. Because the second support portion 120 is on an inner side, the first support portion 110 is on an outer side, and a circumferential dimension of the first support portion 110 is greater than a circumferential dimension of the second support portion 120, space between the first support portion 110 and the second support portion 120 gradually increases from an area of a region close to the second support portion 120 to an area of a region close to the first support portion 110. In this implementation, the magnet unit 210 is disposed as above, so that the magnet unit 210 is sector-shaped, to adapt to the space between the first support portion 110 and the second support portion 120. In this way, a larger area of the magnet unit 210 is filled between the first support portion 110 and the second support portion 120, and internal space of the rotor support 100 is fully utilized, so that an area of the magnet unit 210 is increased, a density of magnetic fluxes is increased, and output torque is increased.

In a possible implementation, the first permanent magnet 212 is continuous in the radial direction of the second support portion 120. If the first permanent magnet 212 is discontinuous in the radial direction of the second support portion 120, as shown in FIG. 12, the permanent magnet includes three magnet sub-units 201, 202, and 203 distributed in the radial direction. A permanent magnet is generally of high structural strength and is difficult to process. For example, the permanent magnet is magnetic steel. Therefore, it is difficult to process and align surfaces on two sides of all three permanent magnets in the circumferential direction C, and processing costs are high. If the surfaces on the two sides of all the three permanent magnets are not aligned in the circumferential direction C (as shown in FIG. 12), space of the rotor support 100 is wasted, which reduces an area filled by the permanent magnet and degrades performance of the axial motor 1. In addition, three sets of stamping dies are needed for the three magnet sub-units, and a large quantity of dies for magnetic steel are needed. To ensure coaxiality of inner and outer arc walls of the three magnet sub-units, high processing precision is required, which causes a processing process to be complex. In this implementation, the first permanent magnet 212 is continuous in the radial direction R of the second support portion 120. A structure that is single-piece and continuous in the radial direction R can ensure that surfaces on two sides of the first permanent magnet 212 in the circumferential direction C are aligned. This not only simplifies processing, but also helps increase a size of the magnet unit 210 to increase a density of magnetic fluxes.

In a possible implementation, a projection of the first permanent magnet 212 on the first soft magnet 211 in the axial direction O of the second support portion 120 is located within the first soft magnet 211 (as shown in FIG. 11). Based on configuration in this implementation, a circumferential dimension of the first soft magnet 211 is greater than a circumferential dimension of the first permanent magnet 212. This facilitates concentration of magnetic flux lines L and magnetic conduction. In this implementation, an area of a largest surface of the first permanent magnet 212 is smaller than an area of a largest surface of the first soft magnet 211, so that most or all of magnetic flux lines L flowing out from the first permanent magnet 212 can enter the first soft magnet 211, be concentrated through the first soft magnet 211, and flow into an adjacent magnet unit 210 through the first soft magnet 211. Both the largest surface of the first soft magnet 211 and the largest surface of the first permanent magnet 212 intersect perpendicularly with the axial direction O of the second support portion 120.

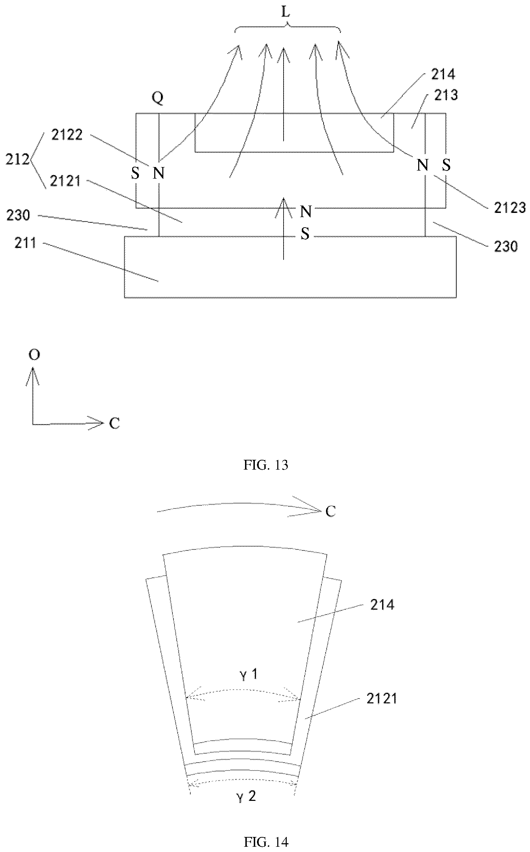

Still refer to FIG. 10 and FIG. 11. In a possible implementation, the magnet unit 210 further includes a second soft magnet 213. The first permanent magnet 212 includes a first body portion 2121, a first portion 2122, and a second portion 2123. The first soft magnet 211, the first body portion 2121, and the second soft magnet 213 are stacked in the axial direction O of the second support portion 120. The first portion 2122 and the second portion 2123 are arranged on two sides of the first body portion 2121 and the second soft magnet 213 in the circumferential direction C of the second support portion 120. As shown in FIG. 13, in this implementation, the first soft magnet 211 and the second soft magnet 213 are disposed on two sides of the first permanent magnet 212 in the axial direction O respectively, so that magnetic flux lines L on the two sides of the first permanent magnet 212 in the axial direction O are all concentrated by the soft magnets, thereby increasing a density of magnetic fluxes in the air gap. In this implementation, configuration of the first portion 2122 and the second portion 2123 facilitates concentration of the magnetic flux lines L. When the first portion 2122 and the second portion 2123 protrude toward a side of the air gap Q, the magnetic flux lines L are concentrated into a winding coil on the stator 12, so that a waveform of a density of magnetic fluxes in the air gap is close to a sine wave. This can increase output torque and reduce torque ripple. In this implementation, a section of the first permanent magnet 212 is U-shaped (as shown in FIG. 13).

In a possible implementation, the first permanent magnet 212 is magnetic steel, and a circumferential dimension of the first body portion 2121 gradually increases from an end close to the second support portion 120 to an end away from the second support portion 120. Therefore, the first body portion 2121 is sector-shaped, where the first body portion 2121 is also magnetic steel, and the magnetic steel is sector-shaped, allowing full use of space in the rotor support 100, so as not to cause insufficient performance of the motor due to a small size that is of the magnet unit 210 and that is occupied by the magnetic steel at an outer diameter. The magnetic steel is sector-shaped to effectively improve performance of the axial motor. In addition, the magnetic steel is built in the magnet unit 210, which increases a torque component of the axial motor 1 and causes the axial motor 1 to maintain a large power under high speed conditions.

In a possible implementation, a magnetization direction of the first body portion 2121 is the same as the axial direction O of the second support portion 120, and magnetization directions of the first portion 2122 and the second portion 2123 intersect with the axial direction O of the second support portion 120. In this way, magnetic flux lines L of the first portion 2122 and the second portion 2123 flow into or flow out from the middle of the first portion 2122 and the second portion 2123. The magnetic flux lines L that flow into or flow out from the middle of the first portion 2122 and the second portion 2123 attract magnetic flux lines that flow into or flow out from the first body portion 2121 to be more concentrated, so that a waveform of a density of magnetic fluxes passing the air gap is close to a sine wave. This can increase output torque and reduce torque ripple. In this implementation, the magnetization direction of the first body portion 2121 is perpendicular to a largest surface of the first body portion 2121, the magnetization direction of the first portion 2122 is perpendicular to a largest surface of the first portion 2122, and the magnetization direction of the second portion 2123 is perpendicular to a largest surface of the second portion 2123.

In a possible implementation, in the first permanent magnet 212, the first body portion 2121, the first portion 2122, and the second portion 2123 are structures independent of each other, which facilitates processing. For example, when the first permanent magnet 212 is magnetic steel, the magnetic steel is difficult to shape due to high strength. In this implementation, the first permanent magnet 212 is set to a U-shaped structure by using three independent structures, which facilitates processing.

Still refer to FIG. 13. In a possible implementation, the magnet unit 210 further includes a second permanent magnet 214, a slot 2131 is provided on a surface that is of the second soft magnet 213 and that is away from the first body portion 2121, and the second permanent magnet 214 is located in the slot 2131. In this implementation, both the second permanent magnet 214 and the first permanent magnet 212 are configured to generate a magnetic flux line L, increase a magnetic flux, increase output torque, and improve performance of the motor.

In an implementation, a magnetization direction of the second permanent magnet 214 is a direction perpendicular to a largest surface of the second permanent magnet 214, or a magnetization direction of the second permanent magnet 214 is the axial direction O. In an implementation, the first body portion 2121 and the second permanent magnet 214 are axially magnetized permanent magnets, and the first portion 2122 and the second portion 2123 are tangentially magnetized permanent magnets.

In a possible implementation, the first soft magnet 211 and the second soft magnet 213 are soft magnetic composite magnets. The soft magnetic composite magnet is a magnet into which a soft magnetic composite is processed, which can reduce a high-frequency eddy current loss and increase an application frequency. In addition, the soft magnetic composite is easy to shape, and can be processed into a soft magnet structure in a required shape. For example, a slot 2131 may be processed in the second soft magnet 213 (as shown in FIG. 11), where the slot 2131 matches a shape of the second permanent magnet 214, so that the second permanent magnet 214 may be accommodated in the slot 2131, and two sides of the second permanent magnet 214 in the circumferential direction C are abutted against two side walls of the slot 2131, thereby improving stability of the two sides of the second permanent magnet 214 in the circumferential direction C.

In a possible implementation, the first permanent magnet 212 and the second permanent magnet 214 are magnetic steel.

In a possible implementation, a projection of the second permanent magnet 214 on the first body portion 2121 in the axial direction O of the second support portion 120 is located within the first body portion 2121 (as shown in FIG. 13). In this implementation, the second permanent magnet 214 and the first body portion 2121 are configured as above to cause a dimension of the second permanent magnet 214 in the circumferential direction C to be less than a dimension of the first body portion 2121 in the circumferential direction C. When the second permanent magnet 214 is closer to the air gap Q than the first body portion 2121, an area of magnetic flux lines of the second permanent magnet 214 is smaller than an area of magnetic flux lines L of the first body portion 2121, and the magnetic flux lines L are gradually concentrated from the first body portion 2121 to the air gap Q, which helps increase a density of magnetic fluxes passing through the air gap Q. In this implementation, a largest surface of the second permanent magnet 214 is smaller than a largest surface of the first body portion 2121, and both the largest surface of the second permanent magnet 214 and the largest surface of the first body portion 2121 intersect with the axial direction O of the second support portion 120.

Refer to FIG. 14. In a possible implementation, a radian of the second permanent magnet 214 in the circumferential direction C of the second support portion 120 is less than a radian of the first body portion 2121 in the circumferential direction C of the second support portion 120. The circumferential direction C of the second support portion 120 is also a circumferential direction of the motor shaft 11, a circumferential direction of the first support portion 110, or a circumferential direction of the magnet structure 200. As shown in FIG. 13, the radian of the second permanent magnet 214 in the circumferential direction C is γ1, and the radian of the first body portion 2121 in the circumferential direction C is γ2, where γ1 is less than γ2, so that the magnet unit 210 better facilitates concentration of magnetic flux lines, and a density of magnetic fluxes entering the air gap Q is closer to a sine wave.

In an implementation, size parameters of parts in the magnet unit 210 may be adjusted according to a requirement. For example, parameters such as a thickness, a radian, and a radial size of each of the first permanent magnet 212 and the first body portion 2121 may be set, parameters such as a thickness, a radial size, and a width of each of the first portion 2122 and the second portion 2123 may be set, and parameters such as a thickness, a radian, and a radial size of each of the first soft magnet 211 and the second soft magnet 213 may be set. In this way, the axial motor 1 has better performance. For example, performance indexes such as permanent magnet usage, a torque output, and a quadrature-direct axis inductance that are required can be obtained.

Refer to FIG. 8a and FIG. 8b. FIG. 8a is a diagram of a structure of the rotor support 100 according to an embodiment of this application. FIG. 8b is a partially enlarged diagram of a part M in FIG. 8a. In a possible implementation, the rotor support 100 further includes a plurality of positioning posts 130. Two ends of each of the plurality of positioning posts 130 are fastened to the first support portion 110 and the second support portion 120 respectively. The positioning post 130 spaces apart two adjacent magnet units 210. Two adjacent positioning posts 130 and a part of the first support portion 110 and a part of the second support portion 120 that are between the two connected positioning posts 130 enclose to form accommodating space 140. The magnet unit 210 is located in the accommodating space 140. In this implementation, the positioning post 130 is configured to fasten the first support portion 110 and the second support portion 120, to improve stability between the first support portion 110 and the second support portion 120. In addition, the rotor support 100 formed by the first support portion 110, the second support portion 120, and the positioning post 130 is a support structure, and has large space, which facilitates heat dissipation of the magnet structure 200.

In a possible implementation, the magnet unit 210 may be bonded to the first support portion 110, the second support portion 120, and the positioning post 130 by using a bonding adhesive.

In a possible implementation, after the magnet unit 210 is mounted on the rotor support 100, the bonding adhesive may be filled in a gap between the magnet unit 210 and the rotor support 100, to enhance bonding strength and improve structural reliability.

In a possible implementation, the rotor support 100 further includes limiting ribs 150, and the limiting ribs 150 are located on two sides of the positioning post 130 in the circumferential direction C. A limiting rib 150 is provided on each of opposite surfaces of two adjacent positioning posts 130. The limiting rib 150 is configured to be clamped into a limiting slot 230 of the magnet unit 210 (as shown in FIG. 13), to improve structural reliability of the magnet unit 210 and the rotor support 100.

Specifically, refer to FIG. 13 again. In this implementation, in the axial direction O, there is a gap between the first portion 2122 of the first permanent magnet 212 and the first soft magnet 211. The first portion 2122, the first soft magnet 211, and the first body portion 2121 enclose to form the limiting slot 230, and the limiting rib 150 is clamped into the limiting slot 230.

In another implementation, another limiting structure may be further disposed on a surface that is of each of the positioning post 130, the first support portion 110, and the second support portion 120 and that face the accommodating space 140, to position the magnet unit 210 and therefore improve structural reliability of the magnet unit 210 and the rotor support 100.

In a possible implementation, the rotor support 100 is a non-magnetic conductive support. The non-magnetic conductive support can reduce magnetic leakage and a magnetic flux loss, so that most magnetic fluxes of two adjacent magnet units 210 flow into the winding coil of the stator 12, thereby increasing output torque. If a magnetic conductive support is used, the magnetic conductive support causes a part of magnetic fluxes to be scattered from the rotor support 100 in the radial direction R, thereby consuming the part of magnetic fluxes, and affecting performance of the axial motor 1.

Still refer to FIG. 8b. In a possible implementation, a through-flow hole 131 extending in the radial direction R of the second support portion 120 is provided in the positioning post 130. The through-flow hole 131 facilitates heat dissipation.

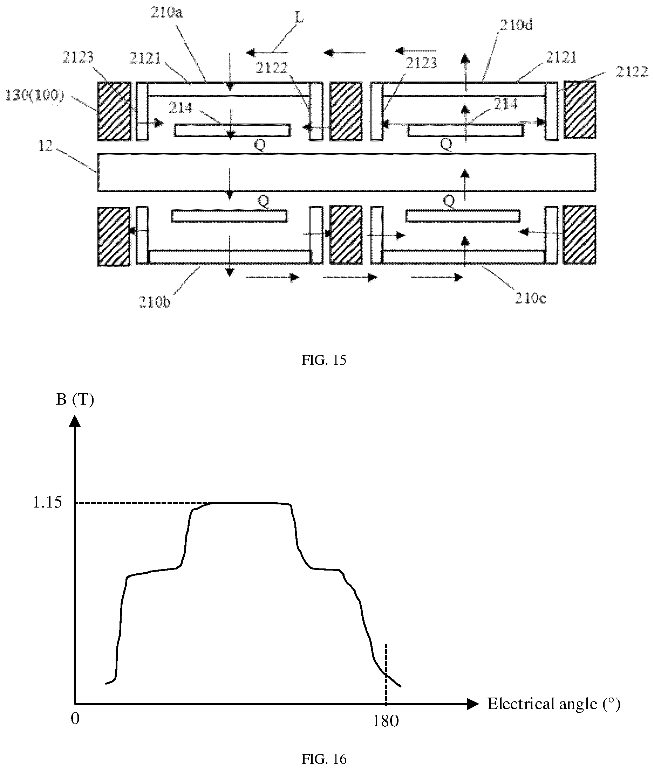

Refer to FIG. 15. FIG. 15 is a magnetic circuit of an axial motor 1 according to a first embodiment of this application. To clearly illustrate the magnetic circuit, a first soft magnet 211 and a second soft magnet 213 are omitted in FIG. 15. In this embodiment, the axial motor 1 includes two axial motor rotors 10. A structure of a magnet unit 210 of each axial motor rotor 10 is shown in FIG. 9, FIG. 10, FIG. 11, and FIG. 13. In this embodiment, the magnet unit 210 includes a first soft magnet 211, a first permanent magnet 212, a second soft magnet 213, and a second permanent magnet 214. The first permanent magnet 212 includes a first body portion 2121, a first portion 2122, and a second portion 2123. A dimension of the second permanent magnet 214 in a circumferential direction C is less than a dimension of the first body portion 2121 in the circumferential direction C. In addition, the first portion 2122 and the second portion 2123 that protrude toward an air gap Q are disposed on two sides of the first body portion 2121. The magnet unit 210 that has magnetic concentration effect and that includes the first permanent magnet 212 and the second permanent magnet 214 causes generated magnetic flux lines L to be concentrated and then enter the air gap Q, so that a waveform of a density of magnetic fluxes in the air gap Q is close to a sine wave. This can increase output torque and reduce torque ripple.

FIG. 15 shows a magnetic circuit of the one-pole-pair magnet unit 210 of the two axial motor rotors 10 and the stator 12. Two magnet units 210 of an axial motor rotor 10 in the upper part of FIG. 15 are one-pole-pair magnet units: a magnet unit 210a and a magnet unit 210d. The magnet unit 210a and the magnet unit 210d have opposite magnetization directions. Specifically, a first body portion 2121 of a first permanent magnet 212 of the magnet unit 210a and a second permanent magnet 214 of the magnet unit 210a have a same magnetization direction. A first body portion 2121 of a first permanent magnet 212 of the magnet unit 210d and a second permanent magnet 214 of the magnet unit 210d have a same magnetization direction. However, the first body portion 2121 of the first permanent magnet 212 of the magnet unit 210a and the first body portion 2121 of the first permanent magnet 212 of the magnet unit 210d have opposite magnetization directions. The second permanent magnet 214 of the magnet unit 210a and the second permanent magnet 214 of the magnet unit 210d have opposite magnetization directions. A first portion 2122 of the first permanent magnet 212 of the magnet unit 210a and a first portion 2122 of the first permanent magnet 212 of the magnet unit 210d have opposite magnetization directions. A second portion 2123 of the first permanent magnet 212 of the magnet unit 210a and a second portion 2123 of the first permanent magnet 212 of the magnet unit 210d have opposite magnetization directions.

Two magnet units 210 of an axial motor rotor 10 in the lower part of FIG. 15 are one-pole-pair magnet units: a magnet unit 210b and a magnet unit 210c. The magnet unit 210b and the magnet unit 210c have opposite magnetization directions. The magnetization directions of the magnet unit 210b and the magnet unit 210c may be understood with reference to the magnetization directions of the magnet unit 210a and the magnet unit 210d, and details are not described herein again.

After a winding coil in the stator 12 is supplied with power, a generated magnetic flux line interacts with a magnetic flux line in the magnet unit 210, driving the axial motor rotor 10 to rotate. In FIG. 15, one direction of the magnetic circuit is sequentially: the magnet unit 210a, the magnet unit 210b, the magnet unit 210c, and the magnet unit 210d. A generated magnetic flux line L enters a winding coil of the stator 12 through an air gap Q. A magnetic flux line L generated by the winding coil of the stator 12 enters the magnet unit 210b through an air gap Q, and enters the adjacent magnet unit 210c through a first soft magnet 211 on an outer side of the magnet unit 210b. A magnetic flux line L generated by the magnet unit 210c enters a winding coil of the stator 12 through an air gap Q. A magnetic flux line L generated by the winding coil of the stator 12 enters the magnet unit 210d through an air gap Q, and enters the adjacent magnet unit 210a through a first soft magnet 211 on an outer side of the magnet unit 210d. In this way, a magnetic circuit loop is formed.

In this embodiment, a waveform of a density of magnetic fluxes in an air gap is shown in FIG. 16. In FIG. 16, a horizontal coordinate represents an electrical angle, a unit of the electrical angle is °, and a vertical coordinate represents a density of magnetic fluxes (B), and a unit of the density of magnetic fluxes is T. It can be learned from FIG. 16 that, the waveform is close to a sine wave. Densities of magnetic fluxes on two sides of the waveform is lower than a density of magnetic fluxes in the middle of the waveform. A peak density of magnetic fluxes that is of the waveform reaches 1.15T. It can be learned that in this embodiment, the magnet unit 210 that has magnetic concentration effect may cause a waveform of a density of magnetic fluxes in the air gap to be close to the sine wave. This can increase output torque and reduce torque ripple.

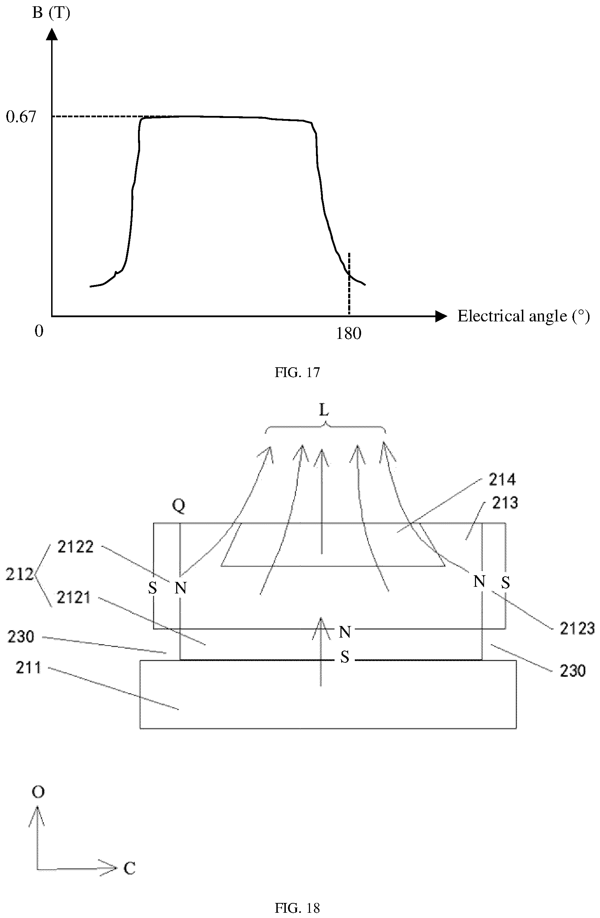

Refer to FIG. 17. FIG. 17 shows a waveform of a density of magnetic fluxes in a magnet unit in which magnetic steel is used as a rotor. In this solution, the rotor includes only the magnetic steel and does not include a soft magnet. In addition, only one magnetic steel sheet is needed. It can be learned from FIG. 17 that a waveform of a density of magnetic fluxes in an air gap is closer to a square wave. As a result, output torque is reduced, and performance of an axial motor 1 is degraded. In addition, a peak density of magnetic fluxes in FIG. 17 is 0.69 T, which is less than the peak density of magnetic fluxes in FIG. 15. Therefore, it can be learned that, the axial motor rotor 10 in the first embodiment may increase the peak density of magnetic fluxes in the air gap by more than 30%.

Refer to FIG. 18. FIG. 18 is a diagram of a structure of an axial motor rotor 10 according to a second embodiment of this application. In this embodiment, different from the first embodiment, a size of a section of a second permanent magnet 214 gradually decreases from an end close to a first body portion 2121 to an end away from the first body portion 2121. The section of the second permanent magnet 214 is a section obtained by sectioning the second permanent magnet 214 in an axial direction O of the second support portion 120 by using an arc that has a same radian as that of the second permanent magnet 214.

In this embodiment, the size of the section of the second permanent magnet 214 gradually decreases from the end close to the first body portion 2121 to the end away from the first body portion 2121, so that a size of an end close to an air gap Q side is less than a size of an end away from the air gap Q side, and magnetic flux lines L are more concentrated toward the air gap Q side. This causes a waveform of a density of magnetic fluxes in an air gap to be closer to a sine wave, thereby improving the density of magnetic fluxes in the air gap.

FIG. 18 shows a magnetic circuit in one of the implementations, where a direction of an arrow is a direction of a magnetic flux line. It should be noted that the descriptions of the structure and the position relationship between the rotor support 100 and the magnet structure 200 in the first embodiment are also applicable to the descriptions of the structure and the position relationship between the rotor support 100 and the magnet structure 200 in the second embodiment. The descriptions of the structure and the position relationship between the rotor support 100, the first soft magnet 211, the first permanent magnet 212, the second permanent magnet 214, and the second soft magnet 213 in the first embodiment are also applicable to the descriptions of the structure and the position relationship between the rotor support 100, the first soft magnet 211, the first permanent magnet 212, the second permanent magnet 214, and the second soft magnet 213 in the second embodiment. Details are not described herein again.

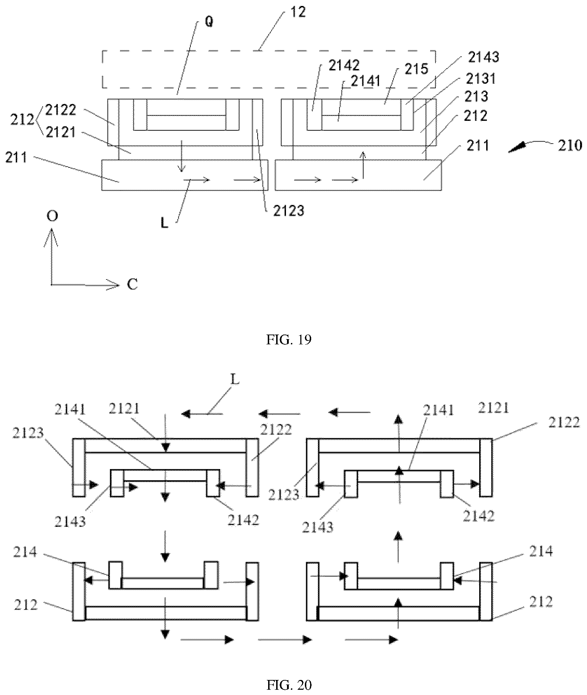

Refer to FIG. 19. FIG. 19 is a diagram of a structure of an axial motor rotor 10 according to a third embodiment of this application. In this embodiment, different from the first embodiment, a magnet unit 210 further includes a third soft magnet 215. A second permanent magnet 214 includes a second body portion 2141, a third portion 2142, and a fourth portion 2143. The third soft magnet 215 is located on a side that is of the second body portion 2141 and that is away from a second soft magnet 213. The third portion 2142 and the fourth portion 2143 are arranged on two sides of the second body portion 2141 and the third soft magnet 215 in a circumferential direction C of a second support portion 120. In this embodiment, the third portion 2142 and the fourth portion 2143 that are of the second permanent magnet 214 protrude toward an air gap Q side relative to the second body portion 2141. This improves effect of concentrating magnetic flux lines L, so that a waveform of a density of magnetic fluxes in an air gap is closer to a sine wave, and the density of magnetic fluxes in the air gap is increased.

In a possible implementation, at least one of the first soft magnet 211, the second soft magnet 213, and the third soft magnet 215 is a soft magnetic composite magnet. In this embodiment, each of the first soft magnet 211, the second soft magnet 213, and the third soft magnet 215 is a soft magnet composite magnet.

Refer to FIG. 20. FIG. 20 is a magnetic circuit of two-pole-pair magnet units 210 that are opposite of two axial motor rotors 10. FIG. 20 shows a magnetic circuit in one of the implementations, where a direction of an arrow is a direction of a magnetic flux line L. To clearly illustrate the magnetic circuit, the first soft magnet 211, the second soft magnet 213, the third soft magnet 215, and the rotor support 100 are omitted in FIG. 20. That the two-pole-pair magnet units 210 form a magnetic circuit loop is shown in FIG. 20. It should be noted that the descriptions of the structure and the position relationship between the rotor support 100 and the magnet structure 200 in the first embodiment are also applicable to the descriptions of the structure and the position relationship between the rotor support 100 and the magnet structure 200 in the third embodiment. The structural relationship and the descriptions of the rotor support 100, the first soft magnet 211, the first permanent magnet 212, and the second soft magnet 213 in the first embodiment are also applicable to the structural relationship and the descriptions of the rotor support 100, the first soft magnet 211, the first permanent magnet 212, and the second soft magnet 213 in the third embodiment. Details are not described herein again.

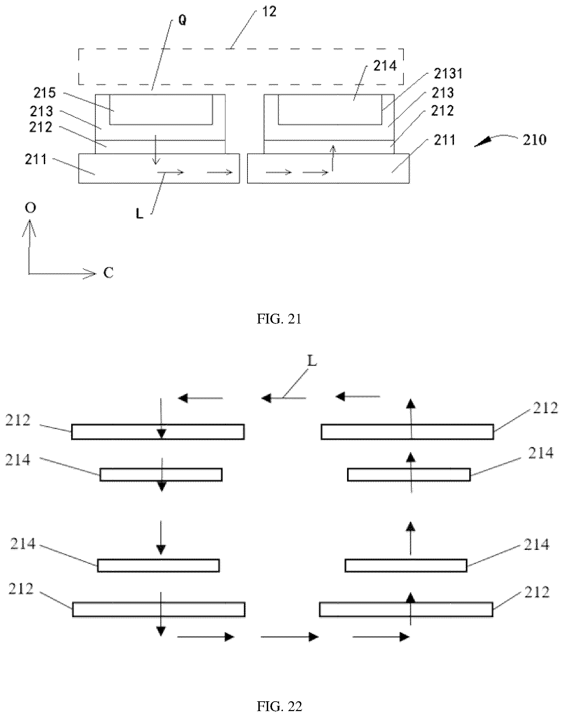

Refer to FIG. 21. FIG. 21 is a diagram of a structure of an axial motor rotor 10 according to a fourth embodiment of this application. In this embodiment, different from the first embodiment, a section of each of a first permanent magnet 212 and a section of a second permanent magnet 214 is of a bar-shaped structure. Specifically, a magnet unit 210 includes a first soft magnet 211, the first permanent magnet 212, a second soft magnet 213, and the second permanent magnet 214. The first soft magnet 211, the first permanent magnet 212, and the second soft magnet 213 are stacked in an axial direction O of a second support portion 120. A slot 2131 is disposed on a surface that is of the second soft magnet 213 and that is away from the first permanent magnet 212, and the second permanent magnet 214 is located in the slot 2131. A projection of the second permanent magnet 214 on the first permanent magnet 212 in the axial direction O of the second support portion 120 is located in the first permanent magnet 212. In this embodiment, the second permanent magnet 214 is located in the slot 2131 of the second soft magnet 213, and two sides of the second permanent magnet 214 in a circumferential direction C are covered by the second soft magnet 213, so that magnetic flux lines flowing out from the two sides of the second permanent magnet 214 in the circumferential direction C can be concentrated by the second soft magnet 213, thereby increasing a density of magnetic fluxes in an air gap.

In a possible implementation, the projection of the second permanent magnet 214 on the first permanent magnet 212 in the axial direction O is located in the first permanent magnet 212. In an implementation, a radian of the second permanent magnet 214 is less than a radian of the first permanent magnet 212. When the axial motor rotor 10 in this embodiment is mounted on an axial motor 1, compared with the first permanent magnet 212, the second permanent magnet 214 is disposed closer to a stator 12. In other words, compared with the first permanent magnet 212, the second permanent magnet 214 is disposed closer to an air gap Q. A range of magnetic flux lines L generated by the second permanent magnet 214 is smaller than a range of magnetic flux lines L generated by the first permanent magnet 212, so that the magnetic flux lines L of the second permanent magnet 214 are more concentrated. The more concentrated magnetic flux lines L of the second permanent magnet 214 attract and concentrate the magnetic flux lines L generated by the first permanent magnet 212, so that the magnetic flux lines L of each of the first permanent magnet 212 and the second permanent magnet 214 are more concentrated, and more magnetic flux lines L enter the air gap. This improves a density of magnetic fluxes in an air gap, causes a waveform of a density of magnetic fluxes in the air gap to be closer to a sine wave, increases output torque, and improves performance of the axial motor 1.

FIG. 22 is a magnetic circuit of two-pole-pair magnet units 210 that are opposite of two axial motor rotors 10. To clearly illustrate the magnetic circuit, the first soft magnet 211, the second soft magnet 213, and the rotor support 100 are omitted in FIG. 22. One-pole-pair magnet units 210 of one axial motor rotor 10 have opposite magnetization directions, and one-pole-pair magnet units 210 of the other axial motor rotor 10 have opposite magnetization directions. In addition, the magnetization directions of the two-pole-pair magnet units 210 of the two axial motor rotors 10 meet the fact that a circulation loop of magnetic flux lines L is formed in the two-pole-pair magnet units 210, and the magnetic flux lines L enter a winding coil in the intermediate stator 12. As shown in FIG. 22, the two-pole-pair magnet units 210 form a magnetic circuit loop.

It should be noted that the descriptions of the structure and the position relationship between the rotor support 100 and the magnet structure 200 in the first embodiment are also applicable to the descriptions of the structure and the position relationship between the rotor support 100 and the magnet structure 200 in the fourth embodiment. The structural relationship and the descriptions of the rotor support 100, the first soft magnet 211, and the second soft magnet 213 in the first embodiment are also applicable to the structural relationship and the descriptions of the rotor support 100, the first soft magnet 211, and the second soft magnet 213 in the fourth embodiment. Details are not described herein again.

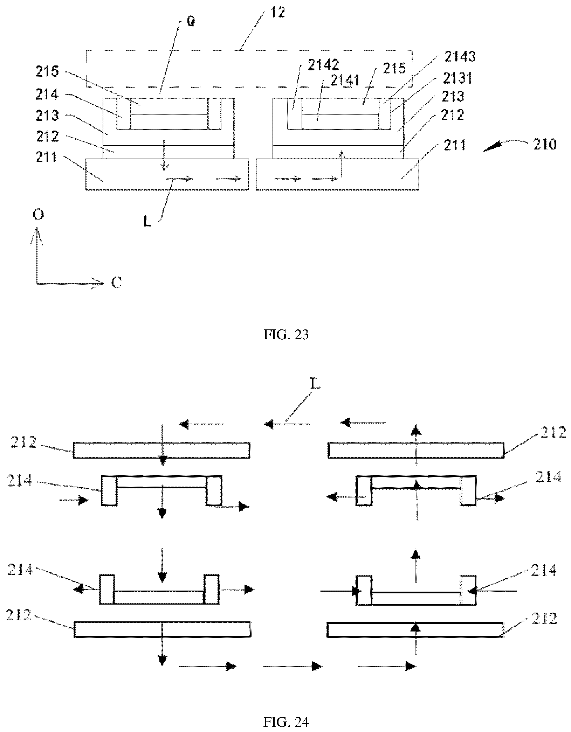

Refer to FIG. 23. FIG. 23 is a diagram of a structure of a magnet unit 210 of an axial motor rotor 10 according to a fifth embodiment of this application. In this embodiment, different from the first embodiment, a section of a first permanent magnet 212 is of a bar-shaped structure, and a section of a second permanent magnet 214 is of a U-shaped structure. Specifically, a magnet unit 210 further includes a third soft magnet 215. The second permanent magnet 214 includes a second body portion 2141, a third portion 2142, and a fourth portion 2143. The third soft magnet 215 is located on a side that is of the second body portion 2141 and that is away from a second soft magnet 213. The third portion 2142 and the fourth portion 2143 are arranged on two sides of the second body portion 2141 and the third soft magnet 215 in a circumferential direction C of a second support portion 120. In this embodiment, the third portion 2142 and the fourth portion 2143 that are of the second permanent magnet 214 protrude toward an air gap Q side relative to the second body portion 2141. This improves effect of concentrating magnetic flux lines L, so that a waveform of a density of magnetic fluxes in an air gap is closer to a sine wave, and the density of magnetic fluxes in the air gap is increased.

FIG. 24 is a magnetic circuit of two-pole-pair magnet units 210 that are opposite of two axial motor rotors 10. To clearly illustrate the magnetic circuit, the first soft magnet 211, the second soft magnet 213, the third soft magnet 215, and the rotor support 100 are omitted in FIG. 24. FIG. 24 shows a magnetic circuit in one of the implementations, where a direction of an arrow is a direction of a magnetic flux line L. It should be noted that the descriptions of the structure and the position relationship between the rotor support 100 and the magnet structure 200 in the first embodiment are also applicable to the descriptions of the structure and the position relationship between the rotor support 100 and the magnet structure 200 in the fifth embodiment. The structural relationship and the descriptions of the rotor support 100, the first soft magnet 211, and the second soft magnet 213 in the first embodiment are also applicable to the structural relationship and the descriptions of the rotor support 100, the first soft magnet 211, and the second soft magnet 213 in the fifth embodiment. Details are not described herein again.

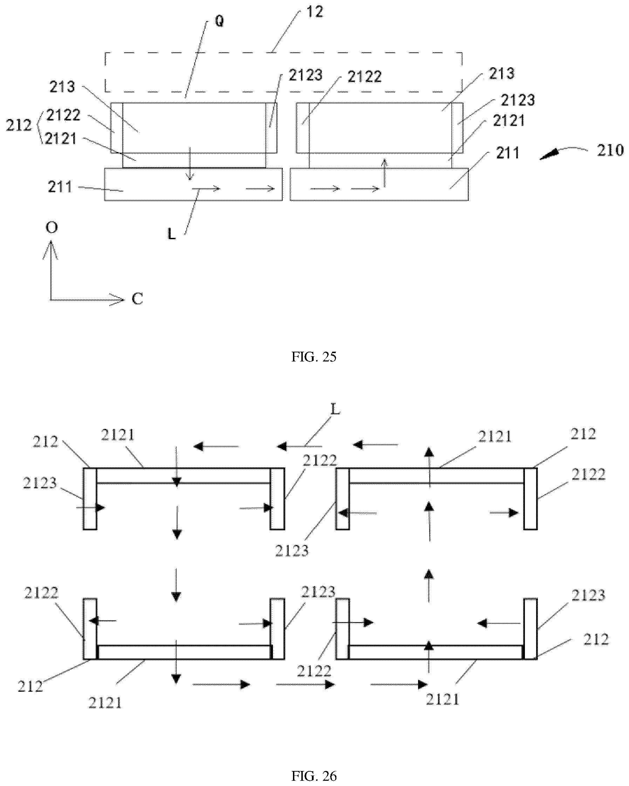

Refer to FIG. 25. FIG. 25 is a diagram of a structure of a magnet unit 210 of an axial motor rotor 10 according to a sixth embodiment of this application. In this embodiment, different from the first embodiment, only a first permanent magnet 212 is included, and a section of the first permanent magnet 212 is of a U-shaped structure. Specifically, in this embodiment, the first permanent magnet 212 includes a first body portion 2121, a first portion 2122, and a second portion 2123. A first soft magnet 211, the first body portion 2121, and a second soft magnet 213 are stacked in an axial direction O of a second support portion 120. The first portion 2122 and the second portion 2123 are arranged on two sides of the first body portion 2121 and the second soft magnet 213 in the circumferential direction C of the second support portion 120. In this implementation, the first soft magnet 211 and the second soft magnet 213 are disposed on two sides of the first permanent magnet 212 in the axial direction O respectively, so that magnetic flux lines on the two sides of the first permanent magnet 212 in the axial direction O are all concentrated by the soft magnets, thereby increasing a density of magnetic fluxes in the air gap. In this implementation, configuration of the first portion 2122 and the second portion 2123 facilitates concentration of the magnetic flux lines L. When the first portion 2122 and the second portion 2123 protrude toward a side of a stator 12, the magnetic flux lines L are concentrated into a winding coil on the stator 12, so that a waveform of a density of magnetic fluxes in the air gap is close to a sine wave. This can increase output torque and reduce torque ripple. In this embodiment, the section of the first permanent magnet 212 is U-shaped.

FIG. 26 is a magnetic circuit of two-pole-pair magnet units 210 that are opposite of two axial motor rotors 10. To clearly illustrate the magnetic circuit, the first soft magnet 211, the second soft magnet 213, and the rotor support 100 are omitted in FIG. 26. FIG. 26 shows a magnetic circuit in one of the implementations, where a direction of an arrow is a direction of a magnetic flux line L. It should be noted that the descriptions of the structure and the position relationship between the rotor support 100 and the magnet structure 200 in the first embodiment are also applicable to the descriptions of the structure and the position relationship between the rotor support 100 and the magnet structure 200 in the sixth embodiment. The structural relationship and the descriptions of the rotor support 100, the first soft magnet 211, and the second soft magnet 213 in the first embodiment are also applicable to the structural relationship and the descriptions of the rotor support 100, the first soft magnet 211, and the second soft magnet 213 in the sixth embodiment. Details are not described herein again.

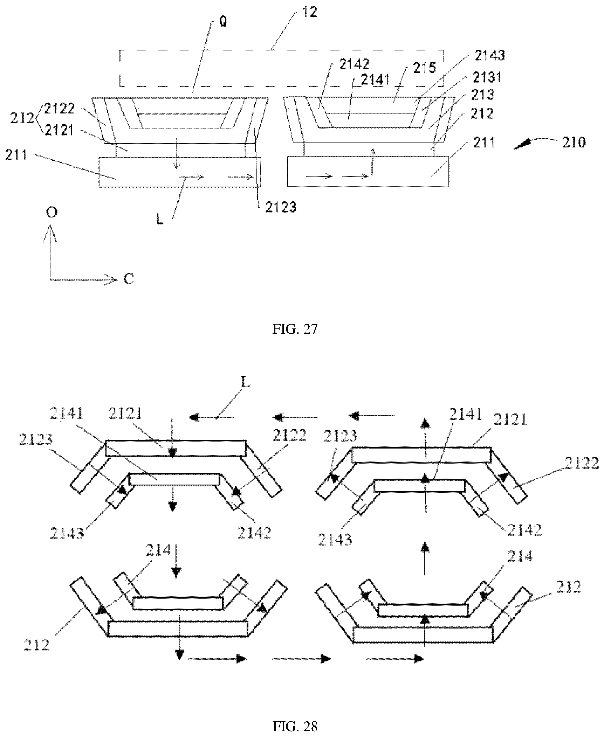

Refer to FIG. 27. FIG. 27 is a diagram of a structure of a magnet unit 210 of an axial motor rotor 10 according to a seventh embodiment of this application. In this embodiment, different from the first embodiment, a section of each of a first permanent magnet 212 and a second permanent magnet 214 are U-shaped, an included angle between a portion and a body portion that are of the first permanent magnet 212 is greater than 90°, and an included angle between a portion and a body portion that are of the second permanent magnet 214 is greater than 90°. Specifically, in this embodiment, a magnet unit 210 further includes a third soft magnet 215. The second permanent magnet 214 includes a second body portion 2141, a third portion 2142, and a fourth portion 2143. The third soft magnet 215 is located on a side that is of the second body portion 2141 and that is away from a second soft magnet 213. The third portion 2142 and the fourth portion 2143 are arranged on two sides of the second body portion 2141 and the third soft magnet 215 in a circumferential direction C of a second support portion 120. In this embodiment, the third portion 2142 and the fourth portion 2143 that are of the second permanent magnet 214 protrude toward an air gap side relative to the second body portion 2141. This improves effect of concentrating magnetic flux lines, so that a waveform of a density of magnetic fluxes in an air gap is closer to a sine wave, and the density of magnetic fluxes in the air gap is increased.

In this embodiment, in the second permanent magnet 214, an included angle between each of the third portion 2142 and the fourth portion 2143 and the second body portion 2141 is greater than 90°. In the first permanent magnet 212, an included angle between each of the first portion 2122 and the second portion 2123 and the first body portion 2121 is greater than 90°. In some implementations, an angle value of the included angle between each of the third portion 2142 and the fourth portion 2143 and the second body portion 2141 may be set according to a requirement, and an angle value of the included angle between each of the first portion 2122 and the second portion 2123 and the first body portion 2121 may be set according to a requirement, so that a magnet structure 200 meets requirements of an axial motor 1 for a density of magnetic fluxes, output torque, and the like.

In this embodiment, shapes and sizes of the first soft magnet 211, the second soft magnet 213, and the third soft magnet 215 may be set according to shapes and sizes of the first permanent magnet 212 and the second permanent magnet 214, so that the magnet unit 210 can be mounted in a rotor support 100.

FIG. 28 is a magnetic circuit of two-pole-pair magnet units 210 that are opposite of two axial motor rotors 10. To clearly illustrate the magnetic circuit, the first soft magnet 211, the second soft magnet 213, the third soft magnet 215, and the rotor support 100 are omitted in FIG. 28. FIG. 28 shows a magnetic circuit in one of the implementations, where a direction of an arrow is a direction of a magnetic flux line L. It should be noted that the descriptions of the structure and the position relationship between the rotor support 100 and the magnet structure 200 in the first embodiment are also applicable to the descriptions of the structure and the position relationship between the rotor support 100 and the magnet structure 200 in the seventh embodiment.

The axial motor rotor, the axial motor, the powertrain, and the vehicle provided in embodiments of this application are described in detail above. The principle and embodiments of this application are described in this specification by using specific examples. The foregoing descriptions of embodiments are merely intended to help understand the method of this application and the core idea thereof. In addition, a person of ordinary skill in the art may change specific embodiments and the application scope based on the idea of this application. In conclusion, the content of this specification should not be understood as a limitation on this application.

## Claims

1. An axial motor rotor, comprising:
a rotor support, comprising a first support portion and a second support portion that are coaxially disposed, wherein the first support portion is sleeved on a side that is of the second support portion and that is away from an axis of the second support portion; and
a magnet structure, comprising a plurality of magnet units, wherein the plurality of magnet units are sequentially arranged in a circumferential direction of the second support portion, each of the plurality of magnet units is located between the first support portion and the second support portion, two ends of the magnet unit in a radial direction of the second support portion are fastened to the first support portion and the second support portion respectively, the magnet unit comprises a first soft magnet and a first permanent magnet, and at least a part of the first soft magnet and at least a part of the first permanent magnet are stacked in an axial direction of the second support portion.

2. The axial motor rotor according to claim 1, wherein a circumferential dimension of the magnet unit gradually increases from an end close to the second support portion to an end away from the second support portion.

3. The axial motor rotor according to claim 1, wherein the first permanent magnet is continuous in the radial direction of the second support portion.

4. The axial motor rotor according to claim 1, wherein a projection of the first permanent magnet on the first soft magnet in the axial direction of the second support portion is located within the first soft magnet.

5. The axial motor rotor according to any one of claims 1 to 4, wherein the magnet unit further comprises a second soft magnet, the first permanent magnet comprises a first body portion, a first portion, and a second portion, the first soft magnet, the first body portion, and the second soft magnet are stacked in the axial direction of the second support portion, and the first portion and the second portion are arranged on two sides of the first body portion and the second soft magnet in the circumferential direction of the second support portion.

6. The axial motor rotor according to claim 5, wherein the magnet unit further comprises a second permanent magnet, a slot is provided on a surface that is of the second soft magnet and that is away from the first body portion, and the second permanent magnet is located in the slot.

7. The axial motor rotor according to claim 6, wherein a projection of the second permanent magnet on the first body portion in the axial direction of the second support portion is located within the first body portion.

8. The axial motor rotor according to claim 6, wherein the magnet unit further comprises a third soft magnet, the second permanent magnet comprises a second body portion, a third portion, and a fourth portion, the third soft magnet is located on a side that is of the second body portion and that is away from the second soft magnet, and the third portion and the fourth portion are arranged on two sides of the second body portion and the third soft magnet in a first direction.

9. The axial motor rotor according to claim 8, wherein at least one of the first soft magnet, the second soft magnet, and the third soft magnet is a soft magnetic composite magnet.

10. The axial motor rotor according to any one of claims 1 to 4, wherein the magnet unit further comprises a second soft magnet and a second permanent magnet, the first soft magnet, the first permanent magnet, and the second soft magnet are stacked in the axial direction of the second support portion, a slot is provided on a surface that is of the second soft magnet and that is away from the first permanent magnet, the second permanent magnet is located in the slot, and a projection of the second permanent magnet on the first permanent magnet in the axial direction of the second support portion is located within the first permanent magnet.

11. The axial motor rotor according to any one of claims 1 to 10, wherein the rotor support further comprises a plurality of positioning posts, two ends of each of the plurality of positioning posts are fastened to the first support portion and the second support portion respectively, the positioning post spaces apart two adjacent magnet units, two adjacent positioning posts and a part of the first support portion and a part of the second support portion that are between the two connected positioning posts enclose to form accommodating space, and the magnet unit is located in the accommodating space.

12. An axial motor, wherein the axial motor comprises a motor shaft, a stator, and the axial motor rotor according to any one of claims 1 to 11, the stator is mounted on the motor shaft and is rotatably connected to the motor shaft, the axial motor rotor is mounted on the motor shaft and is fastened to the motor shaft, and the first soft magnet is located on a side that is of the first permanent magnet and that is away from the stator.

13. The axial motor according to claim 12, wherein the axial motor comprises two axial motor rotors, both the two axial motor rotors are mounted on the motor shaft and are fastened to the motor shaft, and the two axial motor rotors are located on two sides of the stator in an axial direction of the motor shaft.

14. A powertrain, comprising a gearbox and the axial motor according to claim 12, wherein the axial motor is connected to a power input shaft of the gearbox in a transmission manner and is configured to output power to the power input shaft.

15. A vehicle, wherein the vehicle comprises a vehicle body and the axial motor according to claim 12 or 13, and the axial motor is mounted on the vehicle body, or
the vehicle comprises a vehicle body and the powertrain according to claim 14, and the powertrain is mounted on the vehicle body.
